# EUROPÄISCHE PATENTSCHRIFT

(11) **EP 3 197 840 B1**
(45) Veröffentlichungstag und Bekanntmachung des Hinweises auf die Patenterteilung: **20.02.2019**
(21) Anmeldenummer: 15759709.7
(22) Anmeldetag: 27.08.2015
(51) Int. Cl.: C03B 19/12, G02B 3/00

(54) **VERFAHREN ZUR HERSTELLUNG EINES OPTISCHEN GLASELEMENTS**
METHOD FOR PRODUCING AN OPTICAL GLASS ELEMENT
PROCÉDÉ DE FABRICATION D'UN ELEMENT OPTIQUE EN VERRE

(30) Priorität: 24.09.2014 DE 102014113854
(43) Veröffentlichungstag der Anmeldung: 02.08.2017
(73) Patentinhaber: EV Group E. Thallner GmbH, 4782 St. Florian am Inn (AT)
(72) Erfinder: KREINDL, Gerald, A-4780 Schärding (AT); CHOUIKI, Mustapha, A-4020 Linz (AT)
(74) Vertreter: Schneider, Sascha
(86) Internationale Anmeldenummer: PCT/EP2015/069667
(87) Internationale Veröffentlichungsnummer: WO 2016/045907

(56) Entgegenhaltungen:
- WO-A1-00/10929
- WO-A1-98/26315
- DE-A1- 19 534 764
- FR-A1- 2 712 280
- JP-A- 2009 120 444

## Beschreibung

Die Erfindung betrifft ein Verfahren zur Herstellung eines optischen Glaselements.

### Stand der Technik

In den vergangenen Jahren erfolgte eine zunehmende Miniaturisierung elektronischer und optischer Bauteile. Die treibende Kraft hinter dieser Entwicklung sind nicht zuletzt die sogenannten mobile devices, also elektronische Geräte wie smartphones, mobile phones, notebooks und tablets die einen immer größeren elektronische und optischen Funktionsumfang besitzen. Die optischen Elemente bestehen aus mindestens einer, sehr oft aber bereits aus mehreren, übereinander gestapelten Linsen, welche die Lichtstrahlen auf einen Bildsensor projizieren. Dabei muss größter Wert auf die Qualität der optischen Elemente gelegt werden um ein möglichst scharfes und unverzerrtes Bild zu erhalten. Die Druckschrift WO 00/10929 A1 offenbart die Herstellung eines Diffusers, der durch Prägen oder Gießen von lichtformenden Strukturen auf ein optisches Glas von hoher Qualität hergestellt wird.
Grundsätzlich können optische Elemente für das sichtbare Lichtspektrum aus Glas, insbesondere aus SiO2, oder aus Polymeren gefertigt werden. Glas eignet sich vor allem auf Grund seiner exzellenten optischen Eigenschaften, allen voran wegen seines Brechungsindex, besonders zur Herstellung derartiger Linsen.

Dennoch werden Linsen für mobile devices bis heute noch vorwiegend aus Polymeren hergestellt. Polymere werden einfach durch einen Prägeprozess und einen speziellen Stempel zur gewünschten Linsenform geprägt und stellen daher bis heute noch das bevorzugte Material für die Linsenherstellung dar. Des Weiteren findet die Spritzgusstechnik noch breite Anwendung bei der Herstellung derartiger Linsen.

Es gibt zwei große Gruppen von Herstellprozessen für die Massenfertigung von optischen Elementen.

Der erste Herstellprozess erlaubt die Prägung mehrerer optischer Elemente in einem einzelnen Prägeschritt. Diese Gruppe von Herstellprozessen kann wiederum unterteilt werden in eine Untergruppe von Herstellprozessen, die ein Trägersubstrat benötigen, um darauf mehrere, vereinzelte optische Elemente zu prägen und in eine Untergruppe, die gänzlich auf ein Trägersubstrat verzichten kann, da die optischen Elemente Teil eines vollständig zusammenhängenden und in einem Prägeschritt zwischen zwei Stempeln hergestellten, sogenannten monolithischen, Substrats sind. Unter einem monolithischen Substrat versteht man also ein Prägeprodukt, bei dem alle geprägten optischen Elemente miteinander verbunden sind und ein großes, zusammenhängendes Feld optischer Elemente bilden. Da es sich bei den optischen Elementen vorwiegend um Linsen handelt und die Substrate meist kreisrund sind, wird das Prägeprodukt meistens als monolithischer Linsenwafer bezeichnet.

In der zweiten Gruppe von Herstellprozessen werden mehrere optische Elemente nicht durch einen einzelnen Prägeschritt hergestellt, sondern vereinzelt, durch einen sogenannten step-and-repeat Prozess produziert. Mit diesem Herstellprozess ist die Prägung mehrerer vereinzelter optischer Elemente möglich. Die optischen Elemente sind nicht miteinander verbunden. In den meisten Fällen werden die optischen Elemente direkt auf einem Trägersubstrat geprägt. Die optischen Elemente können auch fest mit dem Trägersubstrat verbunden bleiben, wodurch das Trägersubstrat eine funktionelle Eigenschaft erhält. Das Trägersubstrat wird dann in einem Trennprozess entlang der Freiräume zwischen den optischen Elementen, zerschnitten. Nach dem Trennprozess erhält man mehrere, aus einem Trägersubstratteil und einem darauf geprägten optischen Element bestehende, zusammengesetzte optische Elemente. Auf diese Art von Herstellprozess, sowie die daraus entstehenden Produkte, wird in dieser Patentschrift aber nicht näher eingegangen werden.

In einer dritten Gruppe von Herstellprozessen wird das Prägematerial vereinzelt an mehreren Positionen eines Trägersubstrats aufgebracht. Danach erfolgt ein vollflächiger Prägeprozess, der die einzelnen Prägemassen zwar in die jeweiligen Formen prägt, aber nicht zu einer Vereinigung der Prägemassen führt. Dadurch wird es möglich, mehrere optische Elemente gleichzeitig auf einem Trägersubstrat herzustellen. Ein derartiger Prozess wird sehr genau in der Druckschrift WO2013/178263A1 beschrieben.

Unter Glas versteht man eigentlich die sehr breite und allgemeine Werkstoffklasse amorpher, manchmal auch teilkristalliner, Materialien, die durch einen speziellen Herstellprozess in ihrem glasartigen Zustand eingefroren werden.

Während die Herstellung von makroskopischen optischen Elementen, insbesondere Linsen, aus Glas für optische Geräte wie Kameras, Feldstecher oder Teleskope im Prinzip keine große Herausforderung mehr darstellt, ist die entsprechende Herstellung sehr kleiner Linsen aus Glas noch immer extrem problematisch. Der Grund hierfür liegt vor allem darin, dass größere optische Elemente vorwiegend aus Glashalbzeugen geschliffen werden. Die Formgebung wird also vorwiegend im kalten Zustand durchgeführt. Eine derartige Formgebung optischer Elemente, insbesondere von Linsen, im Millimeter- bzw. Mikrometerbereich ist aber kaum durchführbar. Des Weiteren sind konventionelle Herstellmethoden für Linsen, die in modernen Geräten verwendet werden, zu teuer. Des Weiteren werden in der Halbleiter-, Elektronik und Optikindustrie die bereits erwähnten monolithischen Substrate, daher Substrate zusammenhängender optischer Elemente, bevorzugt. Eine Herstellung eines derartigen monolithischen Glassubstrats ist mit konventionellen Methoden ebenfalls extrem schwierig. Denkbar wäre die Verwendung einer vollautomatisierten Mikrofräse, die ein entsprechendes Glashalbzeug bearbeitet. Dieser Prozess weist allerdings einen viel zu geringen Durchsatz auf und kommt daher für die Massenproduktion nicht in Frage. Des Weiteren wäre die Oberfläche der optischen Elemente am Glassubstrat viel zu rau. Die extreme Rauheit beeinflusst die optischen Eigenschaften der optischen Elemente negativ und ist daher grundsätzlich zu vermeiden oder auf ein Minimum zu reduzieren.

In der Industrie existiert dennoch ein massentauglicher Herstellprozess für monolithische Glassubstrate. Dieser basiert allerdings auf einer Ätztechnik und nicht auf einer mechanischen Fertigung. Im Folgenden wird der Stand der Technik in Bezug auf diese Ätztechnik näher erläutert, um darzustellen, wie kompliziert, aufwendig und teuer die gegenwärtige Fertigung monolithischer Glassubstrate ist.

In einem ersten Teilschritt erfolgt die Beschichtung eines ausgesuchten Glassubstrats mit einer Metallschicht. In einem zweiten Teilschritt wird die Metallschicht dann mit einem Photolack beschichtet, der in einem dritten Teilschritt durch eine Maske und einen photolithographischen Prozess entsprechend strukturiert werden muss. Danach wird der Photolack durch Chemikalien an den notwendigen Stellen entfernt und legt den Zugang zur Metallschicht frei. In einem sechsten Teilschritt erfolgt die Strukturübertragung in die Metallschicht gefolgt von der Entfernung des Photolacks. Die Metallschicht dient nun als Maske für die Strukturierung des eigentlichen Glassubstrats. Das Glassubstrat wird anschließend durch relativ toxische Chemikalien geätzt. Im letzten Prozessschritt erfolgt schließlich die Entfernung der Metallschicht, in den meisten Fällen wiederum durch andere Chemikalien.

Die notwendigen Prozessschritte für die Strukturierung eines solchen Glassubstrats sind extrem aufwendig, zeitintensiv, kostspielig und vor allem, auf Grund der sehr gefährlichen und toxischen Chemikalien, immens umweltschädigend. Des Weiteren ist ein dermaßen komplizierter Prozess mit vielen Teilschritten sehr fehleranfällig.

Abschließend kann festgehalten werden, dass im Stand der Technik noch kein nennenswerter, allen voran massentauglicher, Prozess zur Herstellung von monolithischen Glassubstraten, insbesondere monolithischen Glaslinsenwafern, existiert, der kostengünstig, unkompliziert und mit möglichst wenig Chemie durchgeführt werden kann.

Es ist daher die Aufgabe der vorliegenden Erfindung ein verbessertes Verfahren zur Herstellung von optischen Glaselementen zur Verfügung zu stellen.

### Offenbarung der Erfindung

Diese Aufgabe wird mit dem erfindungsgemäßen Verfahren nach Anspruch 1 gelöst.

Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart und in beliebiger Kombination beanspruchbar sein.

Die Erfindung betrifft ein Verfahren zur Herstellung eines optischen Glaselements, insbesondere mehrerer optischer Glaselemente, mit folgendem Ablauf:
a) Aufbringung einer flüssigen Prägemasse auf einen Prägestempel, insbesondere eine Prägestempeloberfläche und/oder ein Substrat des Prägestempels,
b) Prägung der Prägemasse bei einer Temperatur kleiner als 500 °C und gezielte Strukturierung einer Oberfläche der Prägemasse,
c) Aushärtung der Prägemasse,
d) Sinterung der Prägemasse und dadurch Urformung des optischen Glaselements, insbesondere der optischen Glaselemente, wobei durch die Sinterung eine Schrumpfung und eine Abnahme der Oberflächenrauigkeit des Glaselements in Folge der gezielten Strukturierung vor der Sinterung erfolgt.

Erfindungsgemäß laufen die Schritte a, b, c und d insbesondere zeitlich aufeinanderfolgend ab. In einer speziellen Ausführungsform können die Schritte c und d gleichzeitig, insbesondere in derselben Anlage, durchgeführt werden. Das ist insbesondere für thermisch härtbare Prägemassen der Fall.

Es ist bevorzugt vorgesehen, dass die Prägung im Schritt b) bei einer Temperatur kleiner als 400 °C, bevorzugt kleiner als 300 °C, mit größerem Vorzug kleiner als 200 °C, mit noch größerem Vorzug kleiner als 100 °C und mit größtem Vorzug bei Raumtemperatur erfolgt. Mit Raumtemperatur (auch Zimmertemperatur genannt) ist eine Temperatur gemeint, die zwischen 10 °C und 30 °C, insbesondere zwischen 15 °C und 25 °C, liegt. Vorteilhaft kann die Prägung bei vergleichsweise geringen Temperaturen, insbesondere bei Raumtemperatur erfolgen, was die Prägung wesentlich vereinfacht.

Es ist weiterhin bevorzugt vorgesehen, dass nach dem Schritt a) der Bedeckungsgrad der Prägestempeloberfläche mehr als 20 %, mit Vorzug mehr als 40 %, mit größerem Vorzug mehr als 60 %, mit größtem Vorzug mehr als 80 %, mit allergrößtem Vorzug 100 % beträgt.

Gemäß einer anderen bevorzugten Ausführungsform wird die Prägemasse in Form mehrerer kleiner, verteilter Tropfen auf die Prägestempeloberfläche aufgebracht. Dadurch ist es vorteilhaft möglich, eine besonders homogene Verteilung der Prägemasse zu erreichen oder mehrere nebeneinander liegende aber voneinander getrennte optische Elemente herzustellen.

Es ist weiterhin bevorzugt vorgesehen, dass die Prägung der Prägemasse in Schritt b) durch eine Annäherung des, insbesondere unteren, Prägestempels und/oder eines weiteren, insbesondere oberen, Prägestempels erfolgt. Es kann insbesondere vorgesehen sein, dass die Prägemasse von oben auf den unteren Prägestempel aufgebracht wird und sich der obere Prägestempel von oben dem unteren Prägestempel nähert. Der obere Prägestempel und/oder der untere Prägestempel können beweglich, insbesondere parallel zur Vertikalen, ausgebildet sein.

Es kann insbesondere vorgesehen sein, dass die Aushärtung der Prägemasse im Schritt c) durch ein thermisches Verfahren erfolgt, wobei Wärme zur Prägemasse transportiert wird, wobei ein Polymerisierungsprozess der Prägemasse oberhalb einer kritischen Temperatur Tk startet. Die kritische Temperatur liegt dabei zwischen 0°C und 1000°C, vorzugsweise zwischen 10°C und 750°C, noch bevorzugter zwischen 20°C und 500°C, am bevorzugtesten zwischen 30°C und 250°C, am allerbevorzugtesten zwischen 50°C und 200°C.

Es kann alternativ vorgesehen sein, dass die Aushärtung der Prägemasse im Schritt c) durch ein elektromagnetisches Verfahren erfolgen kann, wobei die Prägemasse durch eine elektromagnetische Strahlung, insbesondere UV-Licht, bestrahlt wird, wobei der Wellenlängenbereich der elektromagnetischen Strahlung zwischen 1 nm und 10.000 nm, mit Vorzug zwischen 10 nm und 1000 nm, mit größerem Vorzug zwischen 100 nm und 500 nm, mit größtem Vorzug zwischen 200 nm und 500 nm liegt.

Gemäß einer anderen bevorzugten Ausführungsform werden die Schritte a), b) und c) in einer Prägevorrichtung durchgeführt und die Sinterung im Schritt d) wird in einer von der Prägevorrichtung getrennten, vorzugsweise außerhalb der Prägevorrichtung angeordneten, Sintervorrichtung durchgeführt. Dadurch ist vorteilhaft eine parallele Bearbeitung möglich. Insbesondere können mehrere Substrate gleichzeitig in einem Sinterofen thermisch behandelt werden. Durch die thermische Behandlung mehrerer Substrate in einem Sinterofen kann vorteilhaft die Herstellung des Glaselements bzw. der Glaselemente schneller erfolgen.
Es ist weiterhin bevorzugt vorgesehen, dass die Sinterung im Schritt d) durch Mikrowellenstrahlung erfolgt. Alternativ kann es vorgesehen sein, dass die Sinterung im Schritt d) in einem Ofen, bevorzugt in einem Durchlaufofen, erfolgt, wobei die Temperatur bei der Sinterung größer als 50 °C, mit Vorzug größer als 100 °C, mit größerem Vorzug größer als 300 °C, mit noch größerem Vorzug größer als 500 °C, mit besonders großem Vorzug größer als 700 °C, mit größtem Vorzug größer als 900 °C ist.
Gemäß einer anderen bevorzugten Ausführungsform ist es vorgesehen, dass die Prägemasse mindestens eine der folgenden Komponenten und/oder Kombinationen der folgenden Komponenten aufweist:
- Polyhedrales oligomerisches Silsesquioxan (POSS),
- Polydimethylsiloxan (PDMS),
- Tetraethylorthosilicat (TEOS)
- Poly(organo)siloxane (Silikon)

Die Erfindung betrifft insbesondere ein Verfahren (eine Methode), optische Elemente aus Glas (optische Glaselemente, insbesondere als monolithisches Substrat ausgebildet), insbesondere Glaslinsen, mit besonderem Vorzug ein monolithisches Glaslinsensubstrat, durch einen Imprintprozess bei Temperaturen kleiner als 500 °C, insbesondere bei Raumtemperatur, herzustellen.
Erfindungsgemäß wird unter Glas insbesondere das aus Siliziumdioxid bestehende keramische Glas, sowie seine verschiedenen Abwandlungen, verstanden.
Der Erfindung liegt dabei insbesondere der Gedanke zu Grunde, eine bei Temperaturen kleiner als 500 °C, insbesondere bei Raumtemperatur, formbare Prägemasse zu verwenden, die durch chemische und/oder physikalische Prozesse in zumindest annähernd reines Siliziumdioxid umgewandelt werden kann. Ein wesentlicher erfindungsgemäßer Aspekt ist insbesondere die gezielt steuerbare Abnahme, der Oberflächenrauigkeit und damit eine Zunahme der Glaslinsenqualität des monolithischen Glaslinsensubstrats. Des Weiteren wird insbesondere eine effiziente Methode zum Sintern der Prägemasse oder des Substrats insbesondere mit Hilfe von Mikrowellen offenbart.
Unter Sintern wird erfindungsgemäß insbesondere die Umwandlung der, insbesondere zähflüssigen, Prägemasse in ein hartes, vernetztes Material verstanden. Der Sintervorgang führt insbesondere zu einem sehr kompakten Material mit einer entsprechend hohen Dichte. Der Sintervorgang ist gekennzeichnet durch eine physikalische und/oder chemische Umwandlung der Prägemasse. Bei einer chemischen Umwandlung wird der Sintervorgang insbesondere von der Erzeugung von Gasen begleitet, welche aus dem Sinterkörper ausgetrieben werden, um ein kompaktes, insbesondere von Fehlstellen freies, Endprodukt zu erhalten. Da die meisten Prägemassen aus organischen und/oder organo-silikatischen Materialien bestehen, geht der Sintervorgang sehr oft mit der Erzeugung von Kohlendioxid und/oder Kohlenmonoxid und/oder Wasser einher. Des Weiteren werden, bevorzugt vor und/oder während dem Sintervorgang, Gase und/oder Additive, die der Prägemasse hinzugefügt wurden, ausgedampft oder anderweitig aus der Prägemasse entfernt. Erfindungsgemäß ist eine Entfernung derartiger Additive und/oder aller Gase die während des erfindungsgemäßen Prozesses entstehen, vor dem Sintervorgang, spätestens während dem Sintervorgang, allerspätestens kurz vor Beendigung des Sintervorgangs bevorzugt, um keine ungewollten Produkte, insbesondere Gase, im erfindungsgemäßen Endprodukt zu behalten, die für eine Porenbildung verantwortlich sein können. Der Sintervorgang wird bevorzugt mit einer Abnahme der Eigenspannungen in der Prägemasse oder dem Endprodukt kombiniert. Die Parameter für den Sintervorgang sind daher insbesondere so zu wählen, dass die Eigenspannungen im Endprodukt, insbesondere einem monolithischen Linsenwafer, eine spezifische Eigenspannung besitzen.

Mit Raumtemperatur ist eine Temperatur gemeint, die zwischen 10 °C und 30 °C, insbesondere zwischen 15 °C und 25 °C, liegt.

Die Erfindung handelt daher insbesondere von einem Verfahren, ein optisches Glaselement, insbesondere ein monolithisches Glassubstrat herzustellen, indem ein Prägematerial verwendet wird, das sich bei Temperaturen kleiner als 500 °C, insbesondere Raumtemperatur, prägen lässt und durch eine anschließende Wärmebehandlung in, zumindest annähernd, reines Glas, insbesondere Siliziumdioxid, überführt wird.
Der erfindungsgemäße Prozess verwendet mit anderen Worten eine Prägemasse, insbesondere ein niedrigviskoses Gel, die erst durch einen späteren Prozessschritt insbesondere in Siliziumoxid bzw. Siliziumdioxid umgewandelt wird. Dadurch wird es erfindungsgemäß vorteilhaft möglich, ein optisches Glaselement kostengünstig, schnell und mit mäßigem Einsatz von Chemikalien herzustellen.
Bei dem optischen Glaselement handelt es sich insbesondere um eine Glaslinse, mit besonderem Vorzug um einen monolithischen Glaslinsenwafer. Obwohl im weiteren Text von einem monolithischen Glassubstrat gesprochen wird kann der erfindungsgemäße Gedanke auch zur Herstellung einzelner optischer Elemente auf einem Trägersubstrat, insbesondere durch step-and-repeat Prozesse, verwendet werden.

### Der Stempel

Um die Prägung (Strukturierung) der Prägemasse durchzuführen, benötigt man spezielle Prägestempel. Die Prägestempel müssen extrem hohen Anforderungen entsprechen, damit deren mikro- und/oder nanometergroße Strukturen fehlerfrei als Negativ in die Prägemasse übertragen werden können. Man unterscheidet grundsätzlich zwischen Hart- und Weichstempel. Ein Hartstempel besteht insbesondere aus Metall, Glas oder Keramik. Er ist wenig verformbar, korrosionsbeständig und verschleißfest. Die Oberfläche des Hartstempels wird insbesondere durch Elektronenstrahllithographie oder Laserstrahllithographie bearbeitet. Der Vorteil der Hartstempel liegt vor allem in der hohen Verschleißbeständigkeit. Ein Weichstempel wird insbesondere als Negativ eines Hartstempels abgeformt. Er besteht insbesondere aus einem Polymer, besitzt eine hohe Elastizität und eine geringe Biegefestigkeit. Er ist insbesondere entropieelastisch (gummielastisch). Der Grund ist vor allem eine hohe Adhäsion zwischen der Prägemasse und dem Weichstempel und/oder ein Aufschwellen des Weichstempels. Weichstempel können durch unterschiedliche chemische, physikalische und technische Parameter von Hartstempel unterschieden werden. Denkbar wäre eine Unterscheidung aufgrund des Elastizitätsverhaltens. Weichstempel besitzen ein vorwiegend auf Entropieelastizität, Hartstempel vorwiegend auf Energieelastizität, beruhendes Verformungsverhalten. Des Weiteren können die beiden Stempelarten beispielsweise über ihre Härte unterschieden werden. Die Härte ist der Widerstand, den ein Material einem eindringenden Körper entgegenstellt. Da Hartstempel insbesondere aus Metallen oder Keramiken bestehen, besitzen sie entsprechend hohe Härtewerte. Es gibt unterschiedliche Möglichkeiten die Härte eines Festkörpers anzugeben. Eine sehr gebräuchliche Methode ist die Angabe der Härte nach Vickers. Hartstempel können insbesondere Vickershärten größer als 500 HV aufweisen.

Besonders vorteilhaft für eine Entformung ist gemäß einer vorteilhaften Ausführungsform der Erfindung eine Kombination aus hydrophober Stempeloberfläche und hydrophober Oberfläche der Prägemasse. Unter Hydrophilität versteht man die hohe Wechselwirkungsfähigkeit der Oberfläche eines Stoffes mit Wasser. Hydrophile Oberflächen sind vorwiegend polar und interagieren mit den permanenten Dipolen der Moleküle von Fluiden, bevorzugt mit Wasser, entsprechend gut. Die Hydrophilität einer Oberfläche wird insbesondere mit Hilfe eines Kontaktwinkelmessgeräts quantifiziert. Hydrophile Oberflächen besitzen dabei sehr geringe Kontaktwinkel. Muss die erfindungsgemäße Prägemasse eine hydrophile Oberfläche besitzen, um möglichst einfach vom Stempel entformt werden zu können, dann sollen erfindungsgemäß folgende Wertebereiche gelten: Eine hydrophile Oberfläche besitzt einen Kontaktwinkel kleiner als 90°, mit Vorzug kleiner als 60°, mit größerem Vorzug kleiner als 40°, mit noch größerem Vorzug kleiner als 20°, mit allergrößtem Vorzug von weniger als 1°.

Unter Hydrophobie versteht man entsprechend die geringe Wechselwirkungsfähigkeit der Oberfläche eines Stoffes mit Wasser. Hydrophobe Oberflächen sind vorwiegend unpolar und interagieren kaum mit den permanenten Dipolen der Moleküle von Fluiden. Weist die erfindungsgemäße Prägemasse in einer Ausführungsform der Erfindung eine hydrophobe Oberfläche auf, um möglichst einfach vom Stempel entformt werden zu können, dann sollen erfindungsgemäß folgende Wertebereiche gelten: Eine hydrophobe Oberfläche besitzt einen Kontaktwinkel größer als 90°, mit Vorzug größer als 100°, mit größerem Vorzug größer als 120°, mit noch größerem Vorzug größer als 140°, mit allergrößtem Vorzug größer als 160°.

### Die Prägemasse

Der erfindungsgemäße Gedanke besteht insbesondere in der Verwendung einer speziellen Prägemasse, die bei Raumtemperatur als Flüssigkeit vorliegt. Die Prägemasse ist insbesondere eine kolloidale Dispersion. Unter einer kolloidalen Dispersion versteht man ein heterogenes Gemenge zweier Stoffe, bei denen die mengenmäßig geringere Stoffmenge aus Teilchen im Größenbereich zwischen ca. 1 nm und 500 nm liegt. Die Prägemasse liegt bei Raumtemperatur als Flüssigkeit vor und kann durch chemische und/oder physikalische Prozesse, insbesondere durch die Einwirkung von Photonen, Radikalen, Hitze, Säuren und/oder Laugen, polymerisieren.

Die Prägemasse kann insbesondere Silizium und Sauerstoff aufweisen. Diese Prägemassen können aufgrund ihres flüssigen Aggregatzustandes problemlos verformt und daher auch geprägt werden. Nach der gelungenen Verformung erfolgt die Umwandlung der flüssigen Prägemasse in einen Festkörper, im vorliegenden Fall insbesondere in, zumindest annähernd, reines Siliziumdioxid bzw. Siliziumoxid.

Der Erfindung liegt nun insbesondere der Gedanke zu Grunde, eine entsprechende Prägemasse zur Herstellung mehrerer Glaslinsen, insbesondere eines Glaslinsenwafers, zu verwenden. Dabei wird die Prägemasse in ihrem flüssigen Zustand geprägt und damit entsprechend strukturiert. Danach erfolgt ein, insbesondere thermischer und/oder durch Photonen erzeugter, Aushärtevorgang, bei dem eine erste Vernetzung der Prägemasse stattfindet. Durch diesen Vernetzungsprozess wird die Prägemasse formstabil. Nach Erreichen der Formstabilität kann der Stempel von der Prägemasse entfernt werden.

Die Erfindung beschreibt daher neben dem Herstellungsverfahren auch eine Prägemasse für die Prägelithographie sowie erfindungsgemäße Anwendungen/Verwendungen der Prägemasse. Die Prägemasse zeichnet sich insbesondere durch eine Mischung mindestens einer, mit Vorzug aus anorganischen und/oder organischen Teilen bestehenden, Hauptkomponente, und mindestens einer, insbesondere zur Einstellung der Wechselwirkungseigenschaft der Prägemasse mit Wasser geeignete/verwendete, Nebenkomponente, mit Vorzug einer organischen Komponente, aus. Unter einer Hauptkomponente versteht man eine Komponente, die im überwiegenden Ausmaß zum Aufbau der endgültigen geprägten Form beiträgt. Unter einer Nebenkomponente versteht man alle anderen Komponenten, die mit der Hauptkomponente gemischt werden, dazu zählen insbesondere jene organischen Komponenten, mit deren Hilfe erfindungsgemäß die Hydrophilität bzw. Hydrophobizität eingestellt/beeinflusst wird, Initiatoren und Lösungsmittel. Die Prägemasse kann daher auch aus mehreren Hauptkomponenten und/oder mehrere Nebenkomponenten bestehen. Eine genaue Beschreibung der bevorzugten erfindungsgemäßen Prägemasse findet man zum Beispiel in der Patentschrift WO2014/202127. Grundsätzlich sind jedoch alle Materialien, aus denen man Glas erzeugen kann, geeignet.
Die genannte Prägemasse ist daher eine bevorzugte Prägemasse zur Erzeugung des monolithischen Glassubstrats. Denkbar ist auch die Verwendung eines jeden anderen, geeigneten Materials.
Eine bevorzugte Ausführungsform besteht in der Prägung der Prägemasse zu einem monolithischen Substrat bei Raumtemperatur. Der Prägevorgang selbst findet bei Temperaturen kleiner als 500°C, mit Vorzug kleiner als 400°C, mit größerem Vorzug kleiner als 300°C, mit größtem Vorzug kleiner als 200°C, mit allergrößtem Vorzug kleiner als 100°C, am bevorzugtesten bei Raumtemperatur statt. Das so erhaltene monolithische Substrat wird danach wärmebehandelt. Bei der Wärmebehandlung handelt es sich um einen Sintervorgang, bei dem das Prägematerial komprimiert wird. Der Sintervorgang kann entweder vor und/oder nach der Entformung der Prägemasse vom Prägestempel stattfinden. Mit Vorzug werden allerdings Prägevorgang und Wärmebehandlung voneinander getrennt um eine Erhöhung des Durchsatzes zu erzielen. Mit besonderem Vorzug wird daher die Prägeanlage nur zum Prägen verwendet, während die geprägten monolithischen Substrate in einer externen Wärmebehandlungsanlage, insbesondere einem Ofen, mit besonderem Vorzug einem Durchlaufofen, gesintert werden. Der Sintervorgang findet dabei bei Temperaturen größer als 50°C, mit Vorzug größer als 100°C, mit größerem Vorzug größer als 300°C, mit größtem Vorzug größer als 500°C, mit allergrößtem Vorzug größer als 700°C, am bevorzugtesten größer als 900°C statt.

Die Sinterung erfolgt bevorzugt in einer Wärmebehandlungsanlage. In einer ganz bevorzugten Ausführungsform handelt es sich bei der Wärmebehandlungsanlage um eine Anlage, die über eine Mikrowellenquelle verfügt. Das zu sinternde Glaselement bzw. monolithische Substrat kontaktiert dabei ein, von Mikrowellen erregbares, Bauteil, welches sich durch die Mikrowellen erwärmt, damit das monolithische Substrat erhitzt und sintert. Mit besonderem Vorzug handelt es sich bei dem Bauteil um den oberen und/oder unteren Prägestempel. Dadurch wird erfindungsgemäß eine extrem kompakte Anlage offenbart, welche zur Prägung des monolithischen Substrats, sowie zur Sinterung der selbigen durch die Einwirkung von Mikrowellen geeignet ist. Denkbar ist alternativ die direkte Erwärmung des monolithischen Substrats durch Mikrowellen, sofern die Prägemasse direkt durch Mikrowellen erregbar ist.

Ein erfindungsgemäßer Vorgang findet während des Sintervorgangs der Prägemasse statt. In diesem Zustand kommt es zu einer Schrumpfung des geprägten monolithischen Substrats. Auf Grund der vorwiegend amorphen Mikrostruktur erfolgt die Schrumpfung allerdings homogen. Die Differenz zwischen der Zahl Eins und dem Verhältnis zwischen dem Volumen nach der Schrumpfung und dem Ausgangsvolumen wird als Schrumpffaktor f bezeichnet. Den mit hundert multiplizierten Schrumpffaktor nennt man prozentuelle Schrumpfung. Die prozentuelle Schrumpfung beträgt also vor dem Sintern 0%. Es gibt zwei unterschiedliche Möglichkeiten, die prozentuelle Schrumpfung zu nützen.

In einer Ausführungsform wird die prozentuelle Schrumpfung durch die korrekte Wahl der Prägemasse, sowie der entsprechenden Parameter des Sinterprozesses möglichst gering gehalten. Zunächst wird ein, insbesondere monolithisches, Substrat erzeugt, dessen prozentuelle Schrumpfung kleiner ist als 2%, vorzugsweise kleiner als 1%, noch bevorzugter kleiner als 0.1%, am bevorzugtesten kleiner als 0.01%, am aller bevorzugtesten kleiner als 0.001 %. Durch den geringen prozentuellen Schrumpffaktor weist das, insbesondere monolithische, Substrat mit Vorzug keine oder nur eine sehr geringe Abweichung von der Stempelform auf. Dadurch wird es erfindungsgemäß nicht notwendig, die Schrumpfung bereits beim Stempeldesign zu berücksichtigen. Hierdurch wird vorteilhaft der Herstellungsprozess erheblich vereinfacht.

In der erfindungsgemäßen Ausführungsform, nutzt man die Schrumpfung zur Glättung der Oberfläche des monolithischen Substrats. Durch den Schrumpfvorgang während des Sinterprozesses wird die Prägemasse sehr stark komprimiert. Die Komprimierung beruht einerseits auf einem Ausgasprozess allfälliger Substituenten, andererseits und vorwiegend allerdings auf einem chemischen Vernetzungsvorgang. Durch den Vernetzungsvorgang werden Atome durch die Ausbildung kovalenter, chemischer Bindungen untereinander endgültig und vor allem homogen, daher gleichermaßen in alle Raumrichtungen vernetzt. Dieses sich ausbildende Netz von vorwiegend sehr starken Silizium-Sauerstoff Verbindungen führt zur Erhöhung der Dichte der Prägemasse und zur eigentlichen Umwandlung in das feste, zumindest überwiegend siliziumoxidhaltige Material Glas. Dieser Komprimierungsprozess findet nicht nur im Inneren der Prägemasse sondern auch an seiner Oberfläche statt. Dadurch werden die Unebenheiten entsprechend geglättet, was eine Steigerung der Qualität der optischen Elemente, die auf dem monolithischen Substrat vorhanden sind, führt. Je rauer die Oberfläche eines optischen Elements, insbesondere einer Linse, ist, desto größer ist der diffuse Anteil an Streulicht, welches erst gar nicht zur erwünschten optischen Abbildung beiträgt. Dadurch sinkt mit steigender Rauigkeit die Photonenausbeute. Bei Linsen führt das zu einem abnehmenden Kontrast des Bildes, das von einem, hinter der Linse montierten, Bildsensor aufgenommen und weiterverarbeitet wird. Durch den erfindungsgemäßen und gezielt ausgenützten Vorgang der Schrumpfung und der damit einhergehenden Glättung der Oberfläche der optischen Elemente, insbesondere der Linsen, erfolgt damit eine Erhöhung der Intensitätsausbeute.

Ein besonderer erfindungsgemäßer Aspekt ist die Entfernung aller Verbindungen, die nicht in der Prägemasse, beispielsweise ein monolithisches Substrat, vorkommen dürfen, insbesondere vor- und/oder während des Sintervorgangs erzeugte Gase und/oder Additive. Eine Endkonzentration derartiger Gase und/oder Additive ist nach dem Ende des erfindungsgemäßen Prozesses insbesondere geringer als 100 ppm, kleiner 10 ppm, bevorzugter kleiner 1 ppm, noch bevorzugter kleiner 100 ppb, am allerbevorzugtesten kleiner als 1 ppb.

Ein weiterer erfindungsgemäßer Aspekt ist die spezifische Einstellung der Eigenspannung in der Prägemasse. Die Eigenspannungen in der Prägemasse liegen nach dem Sintervorgang insbesondere zwischen 1000 MPa und - 1000MPa, vorzugsweise zwischen 500 MPa und -500 MPa, noch bevorzugter zwischen 250 MPa und -250MPa, am bevorzugtesten um die 0 MPa. Druckspannungen werden mit negativem, Zugspannungen mit positivem Vorzeichen bezeichnet. Vorzugsweise ist die Prägemasse daher nach dem Sintervorgang eigenspannungsfrei. Ein eigenspannungsfreies Sinterprodukt ist weniger anfällig für Schädigung durch Eigenspannungen. Manchmal kann es allerdings erwünscht oder notwendig sein, Druckeigenspannungen einzubringen, um einer von außen anliegenden Zugbelastung, die in einem Anwendungsfall vorliegen könnte, entgegen zu wirken. In diesem Fall sind Druckspannungen von mehr als -100 MPa, vorzugsweise mehr als -250 MPa, noch bevorzugter von mehr als -500 MPa, noch bevorzugter von mehr als -1000 MPa erwünscht. Die Eigenspannungen können, insbesondere durch thermische Beeinflussung und durch ein entsprechendes Wärmeprofil beim Sintern und der darauf folgenden Abkühlung, eingestellt werden.

Weitere Vorteile, Merkmale und Einzelheiten der Erfindung ergeben sich aus der nachfolgenden Beschreibung bevorzugter Ausführungsbeispiele sowie anhand der Zeichnungen.

Die folgenden Figuren zeigen:
- Figur 1a: eine schematische Querschnittsdarstellung eines ersten Prozessschritts einer beispielhaften Ausführungsform des erfindungsgemäßen Verfahrens,
- Figur 1b: eine schematische Querschnittsdarstellung eines zweiten Prozessschritts einer beispielhaften Ausführungsform des erfindungsgemäßen Verfahrens,
- Figur 1c: eine schematische Querschnittsdarstellung eines dritten Prozessschritts einer beispielhaften Ausführungsform des erfindungsgemäßen Verfahrens,
- Figur 1d: eine schematische Querschnittsdarstellung eines vierten Prozessschritts einer beispielhaften Ausführungsform des erfindungsgemäßen Verfahrens,
- Figur le: eine schematische Querschnittsdarstellung eines fünften Prozessschritts einer beispielhaften Ausführungsform des erfindungsgemäßen Verfahrens,
- Figur 2: eine schematische Querschnittsdarstellung eines optischen Glaselements gemäß einer beispielhaften Ausführungsform,
- Figur 3a: eine vergrößerte, schematische Querschnittsdarstellung eines Substrats vor dem Sintervorgang (nicht erfindungsgemäß),
- Figur 3b: eine vergrößerte, schematische Querschnittsdarstellung eines Substrats gemäß einer anderen beispielhaften Ausführungsform vor dem Sintervorgang,
- Figur 3c: eine vergrößerte, schematische Querschnittsdarstellung eines optischen Glaselements gemäß einer beispielhaften Ausführungsform nach dem Sintervorgang.

In den verschiedenen Figuren sind gleiche Teile stets mit den gleichen Bezugszeichen versehen und werden daher in der Regel auch jeweils nur einmal benannt bzw. erwähnt.

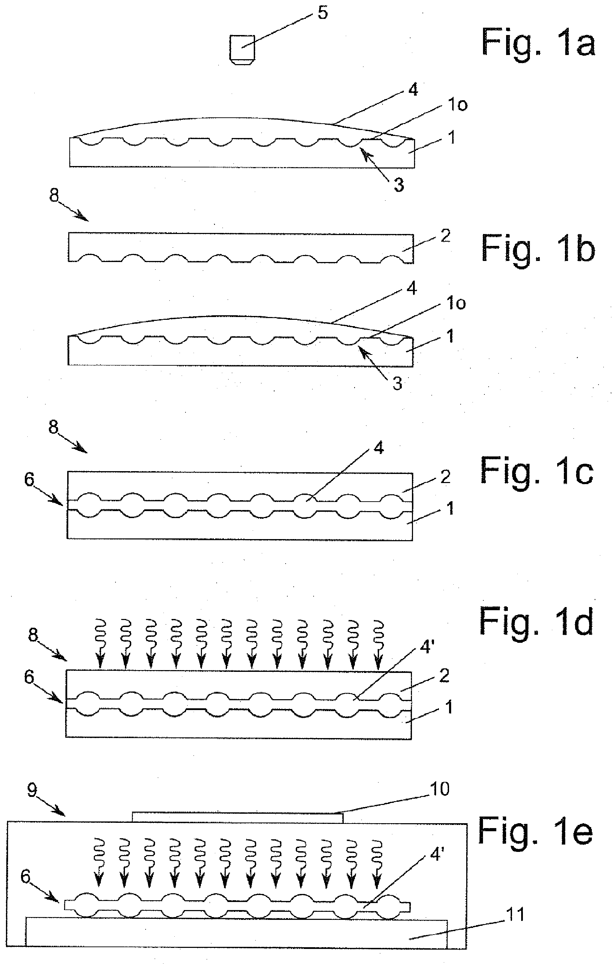

Die Figur 1a zeigt eine schematische Darstellung eines ersten Prozessschrittes einer beispielhaften erfindungsgemäßen Ausführungsform, bei dem eine Prägemasse 4 durch eine Dispensiereinheit 5 auf die Prägestempeloberfläche 1o des unteren Prägestempels 1 dispensiert wird. Die Prägemasse 4 kann durch eine sogenannte Pfützenabscheidung (engl.: puddle dispense) aufgetragen werden. Dabei wird durch die Dispensiereinheit 5 solange Prägemasse 4 auf der Prägestempeloberfläche 1o abgeschieden, bis die Prägemasse 4 den Großteil der Prägestempeloberfläche 1o bedeckt. Denkbar ist auch, dass eine vollständige Bedeckung erst in einem weiteren Prozessschritt erfolgt. Die Prägemasse kann insbesondere durch Schleuderbelackungs- und/oder Sprühbelackungsprozesse aufgebracht werden. Beim Dispensieren beträgt er Bedeckungsgrad der Prägestempeloberfläche 1o mehr als 20%, mit Vorzug mehr als 40%, mit größerem Vorzug mehr als 60%, mit größtem Vorzug mehr als 80%, mit allergrößtem Vorzug 100%.

Durch weitere Prozesse wie beispielsweise dem Schleuderbelacken (engl.: spin coaten) kann der Bedeckungsgrad noch erhöht werden beziehungsweise die Prägemassenschichtdicke t bezüglich des Ortes homogenisiert werden. Denkbar ist auch ein Aufbringen der Prägemasse 4 auf die Prägestempeloberfläche 1o durch einen Sprühbelacker (engl.: spray coater). In einer weiteren, nicht dargestellten Ausführungsform wird die Prägemasse 4 nicht als eine Pfütze, sondern in Form mehrerer kleiner, verteilter Tropfen aufgebracht, die allerdings genügend Prägemasse 4 aufweisen, um in anschließenden Prozessen zu agglomerieren und ein entsprechendes monolithisches Substrat zu bilden. Der Vorteil der Tropfenaufbringung liegt dabei vor allem in der Möglichkeit einer homogeneren Verteilung der Prägemasse 4. Auch die durch die Tropfenaufbringung verteilten Tropfen der Prägemasse 4 können durch einen anschließenden Schleuderbelackungsprozess über die Prägestempeloberflächelo verteilt werden und bereits in diesem Prozessschritt agglomerieren. Denkbar ist allerdings auch das Abscheiden einzelner Tropfen um voneinander getrennte optische Einheiten zu prägen. Ein derartiger Prozess wird in der Druckschrift WO2013/178263A1 beschrieben.

In einem beispielhaften zweiten Prozessschritt, dargestellt in Figur 1b, wird ein zweiter Prägestempel 2 über dem ersten Prägestempel 1 ausgerichtet. Die Ausrichtung der beiden Prägestempel erfolgt dabei vorzugsweise über mehrere (nicht eingezeichnete) Ausrichtungsmarken auf den Prägestempeln 1 und 2. Zwei sich jeweils gegenüberliegende Ausrichtungsmarken an mindestens zwei unterschiedlichen, vorzugsweise möglichst weit am Rand liegenden, Positionen werden durch entsprechende Ausrichtungsanlagen zueinander ausgerichtet.

In einem in Figur 1c dargestellten beispielhaften dritten Prozessschritt erfolgt eine Prägung der Prägemasse 4 durch eine Annäherung der beiden Prägestempel 1 und 2. Die Prägemasse 4 wird dabei in die Prägeformen 3 des oberen Prägestempels 2 und/oder unteren Prägestempels 1 gedrückt.
In einem in Figur 1d dargestellten weiteren beispielhaften Prozessschritt erfolgt eine Aushärtung der Prägemasse 4 zwischen den beiden Prägestempeln 1 und 2. Die Aushärtung kann dabei entweder mittels Wärme, Photonen, elektrischem Strom, Chemikalien wie Säuren und Basen oder jeder anderen Art von chemischer und/oder physikalischer Beanspruchung erfolgen. Besonders bevorzugt sind thermische und elektromagnetische Verfahren.

Bei den thermischen Verfahren wird Wärme über den oberen Prägestempel 2 und/oder den unteren Prägestempel 1 zur Prägemasse 4 transportiert. Die thermischen Initiatoren innerhalb der Prägemasse 4 starten oberhalb einer kritischen Temperatur Tk den Polymerisierungsprozess der Prägemasse 4. Die kritische Temperatur ist dabei größer als Raumtemperatur, mit Vorzug größer als 100°C, mit größerem Vorzug größer als 200°C, mit größtem Vorzug größer als 300°C, mit größtem Vorzug größer als 400°C, am bevorzugtesten größer als 500°C.

Bei einem elektromagnetischen Verfahren wird die Prägemasse 4 durch eine intensive elektromagnetische Strahlung, insbesondere UV Licht, belichtet. Die elektromagnetische Strahlung durchleuchtet dabei den oberen Prägestempel 2 und/oder den unteren Prägestempel 1. Der durchleuchtete Prägestempel 1 und/oder Prägestempel 2 muss dementsprechend transparent für die elektromagnetische Strahlung sein. Der bevorzugte Wellenlängenbereich der elektromagnetischen Strahlung liegt zwischen 1 nm und 10000 nm, mit Vorzug zwischen 10 nm und 1000 nm, mit größerem Vorzug zwischen 100 nm und 500 nm, mit größtem Vorzug zwischen 200 nm und 500 nm.

Nach der Aushärtung der Prägemasse 4 liegt bereits eine formstabile, feste Prägemasse 4' in Form eines monolithischen Substrats 6 vor. Das monolithische Substrat 6 wird zur Umwandlung der Prägemasse 4' in das Glasmaterial 7 noch gesintert. Figur le zeigt einen fünften Prozessschritt einer beispielhaften Ausführungsform. Die Sinterung erfolgt vorzugsweise außerhalb der Prägevorrichtung 8. Damit wird erfindungsgemäß auch eine Trennung von Prägevorgang und Sintervorgang durchgeführt, die sich positiv auf den Durchsatz auswirken kann. Mit besonderem Vorzug wird nämlich die Prägevorrichtung 8 immer nur zum Prägen und eine entsprechende Sintervorrichtung 9 nur zum Sintern verwendet. Bei der Sintervorrichtung 9 handelt es sich beispielsweise um einen Ofen, noch bevorzugter um einen Durchlaufofen. Mit besonderem Vorzug verwendet die Sinteranlage 9 eine Mikrowellenquelle 10. Die Mikrowellenquelle 10 wird verwendet, um entweder das Material 4' des monolithischen Substrats 6 direkt oder ein Bauteil 11, insbesondere einen Probenhalter 11, der möglichst effizient mit dem monolithischen Substrats 6 thermisch gekoppelt ist, zu erwärmen. Die thermische Kopplung besteht entweder über direkten Kontakt des monolithischen Substrats 6 mit dem Bauteil 11 oder über ein, die Wärme möglichst effizient leitendes Gas. In besonderen Ausführungsformen kann es sinnvoll sein, die Prägevorrichtung 8 und die Sintervorrichtung 9 miteinander zu kombinieren. Dadurch wird es erfindungsgemäß möglich, den Präge- und den Sintervorgang in ein und derselben Anlage durchzuführen.

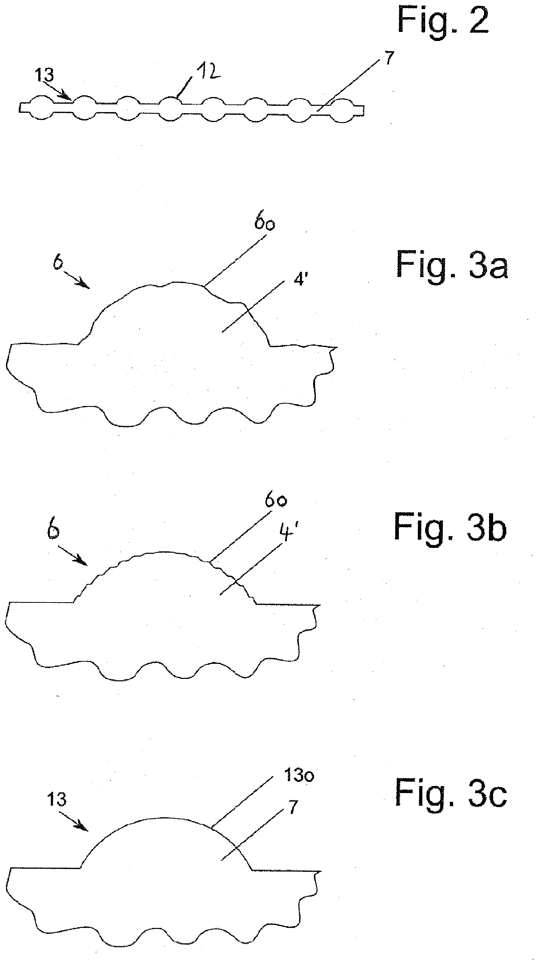

Figur 2 zeigt eine beispielhafte Ausführungsform eines optischen Glaselements 13, bestehend aus mehreren optischen Teilelementen 12. Bei den optischen Teilelementen 12 handelt es sich im speziellen um bikonvexe Linsen. Die optischen Teilelemente 12 könnten aber beispielsweise genauso gut bikonkave, konvexkonkave oder konkavkonvexe Linsen sein. Des Weiteren ist es denkbar, dass es sich bei den optischen Teilelementen 12 um Diffraktionsgitter, um jede andere Art von optischem Element oder um jede andere Art von Glasbauteil handelt.

Die Figuren 3a und 3b zeigen jeweils eine vergrößerte Darstellung eines beispielhaften monolithischen Substrats 6 vor dem Sintervorgang. Figur 3c zeigt ein beispielhaftes optisches Glaselement 13 aus Glasmaterial 7 nach dem Sintervorgang mit einer nahezu idealen Oberfläche 13o. Die monolithischen Substrate 6 bestehen aus dem formstabilen, aber noch nicht gesinterten Material 4'. Die Figur 3a zeigt eine vergrößerte Darstellung eines monolithischen Substrats 6 mit einer statistisch gerauten Oberfläche 6o. Die Figur 3b zeigt eine vergrößerte Darstellung eines anderen monolithischen Substrats 6 mit einer wohldefinierten, systematisch von der Idealform 13o abweichenden, Oberfläche 6o. Die Oberfläche 6o könnte beispielsweise als Negativ einer Prägeform 3 eines Prägestempels 1 oder eines Prägestempels 2 entstehen. Es kann insbesondere vorgesehen sein, die Oberflächen 3o der Prägeformen 3 zwar im Mittel der gewünschten Form passend zu konstruieren und herzustellen, aber deren Nahordnung stufenförmig zu gestalten.
Durch den Schrumpfungsvorgang kommt es zu einer, insbesondere leichten, Glättung der Oberfläche 6o bzw. der stufigen Ausbildung 6o der Substrate 6. Es ist daher ein erfindungsgemäß Aspekt, durch die Strukturierung der Oberfläche 6o, insbesondere durch eine Stufenstrukturierung, Einfluss auf den Schrumpfungsvorgang zu nehmen. Vorzugsweise beeinflusst die Strukturierung der Oberfläche 6o den Schrumpfungsvorgang dahingehend, dass eine möglichst glatte Oberfläche 13o" gemäß Figur 3c entstehet. Diese Glättung ist ein Oberflächeneffekt der, insbesondere sich im gesamten Volumen abspielenden, Komprimierung des Materials 4'.

### Bezugszeichenliste

- 1: Unterer Prägestempel
- 1o: Prägestempeloberfläche des unteren Prägestempels
- 2: Oberer Prägestempel
- 3: Prägeform
- 4, 4': Prägemasse
- 5: Dispensiereinheit
- 6: Monolithisches Substrat
- 6o: Oberfläche
- 7: Glasmaterial
- 8: Prägevorrichtung
- 9: Sintervorrichtung
- 10: Mikrowellenquelle
- 11: Bauteil
- 12: Optisches Teilelement
- 13: Optisches Element
- 13o: Oberfläche

## Patentansprüche

1. Verfahren zur Herstellung eines optischen Glaselements (13), mit folgendem Ablauf:
a) Aufbringung einer flüssigen Prägemasse (4) auf einen Prägestempel (1),
b) Prägung der Prägemasse (4) bei einer Temperatur kleiner als 500°C und gezielte Strukturierung einer Oberfläche (6o) der Prägemasse (4),
c) Aushärtung der Prägemasse (4),
d) Sinterung der Prägemasse (4, 4') und dadurch Urformung des optischen Glaselements (13), wobei durch die Sinterung eine Schrumpfung und eine Abnahme der Oberflächenrauigkeit des Glaselements (13) in Folge der gezielten Strukturierung vor der Sinterung erfolgt.

2. Verfahren nach Anspruch 1, **dadurch gekennzeichnet, dass** die Prägung im Schritt b) bei einer Temperatur kleiner als 400 °C, bevorzugt kleiner als 300 °C, mit größerem Vorzug kleiner als 200 °C, mit noch größerem Vorzug kleiner als 100 °C und mit größtem Vorzug bei Raumtemperatur erfolgt.

3. Verfahren nach einem der vorhergehenden Ansprüche, **dadurch gekennzeichnet, dass** nach dem Schritt a) der Bedeckungsgrad einer Prägestempeloberfläche (1o) des Prägestempels (1) mehr als 20 %, mit Vorzug mehr als 40 %, mit größerem Vorzug mehr als 60 %, mit größtem Vorzug mehr als 80 %, mit allergrößtem Vorzug 100 % beträgt.

4. Verfahren nach einem der vorhergehenden Ansprüche, **dadurch gekennzeichnet, dass** die Prägemasse (4) in Form mehrerer kleiner, verteilter Tropfen auf den Prägestempel (1), insbesondere auf die Prägestempeloberfläche (1o) des Prägestempels (1), aufgebracht wird.

5. Verfahren nach einem der vorhergehenden Ansprüche, **dadurch gekennzeichnet, dass** die Prägung der Prägemasse (4) in Schritt b) durch eine Annäherung des, insbesondere unteren, Prägestempels (1) und eines weiteren, insbesondere oberen, Prägestempels (2) erfolgt.

6. Verfahren nach einem der vorhergehenden Ansprüche, **dadurch gekennzeichnet, dass** die Aushärtung der Prägemasse (4) im Schritt c) durch ein thermisches Verfahren erfolgt, wobei Wärme zur Prägemasse (4) transportiert wird, wobei ein Polymerisierungsprozess der Prägemasse (4) oberhalb einer kritischen Temperatur Tk startet, wobei die kritische Temperatur zwischen 0°C und 1000°C, vorzugsweise zwischen 10°C und 750°C, noch bevorzugter zwischen 20°C und 500°C, am bevorzugtesten zwischen 30°C und 250°C, am allerbevorzugtesten zwischen 50°C und 200°C liegt.

7. Verfahren nach einem der Ansprüche 1 bis 5, **dadurch gekennzeichnet, dass** die Aushärtung der Prägemasse (4) im Schritt c) durch ein elektromagnetisches Verfahren erfolgt, wobei die Prägemasse (4) durch eine elektromagnetische Strahlung, insbesondere UV-Licht, bestrahlt wird, wobei der Wellenlängenbereich der elektromagnetischen Strahlung zwischen 1 nm und 10.000 nm, mit Vorzug zwischen 10 nm und 1000 nm, mit größerem Vorzug zwischen 100 nm und 500 nm, mit größtem Vorzug zwischen 200 nm und 500 nm liegt.

8. Verfahren nach einem der vorhergehenden Ansprüche, **dadurch gekennzeichnet, dass** die Schritte a), b) und c) in einer Prägevorrichtung (8) durchgeführt werden und die Sinterung im Schritt d) in einer von der Prägevorrichtung (8) getrennten, vorzugsweise außerhalb der Prägevorrichtung (8) angeordneten, Sintervorrichtung (9) durchgeführt wird.

9. Verfahren nach einem der vorhergehenden Ansprüche, **dadurch gekennzeichnet, dass** die Sinterung im Schritt d) durch Mikrowellenstrahlung erfolgt.

10. Verfahren nach einem der Ansprüche 1 bis 8, **dadurch gekennzeichnet, dass** die Sinterung im Schritt d) in einem Ofen, bevorzugt in einem Durchlaufofen, erfolgt, wobei die Temperatur bei der Sinterung größer als 50 °C, mit Vorzug größer als 100 °C, mit größerem Vorzug größer als 300 °C, mit noch größerem Vorzug größer als 500 °C, mit besonders großem Vorzug größer als 700 °C, mit größtem Vorzug größer als 900 °C ist.

11. Verfahren nach einem der vorhergehenden Ansprüche, **dadurch gekennzeichnet, dass** die Prägemasse (4) mindestens eine der folgenden Komponenten aufweist:
• Polyhedrales oligomerisches Silsesquioxan POSS
• Polydimethylsiloxan PDMS
• Tetraethylorthosilicat TEOS
• Poly(organo)siloxan Silikon

## Claims

1. Method for production of an optical glass element (13), with the following sequence:
a) Applying a liquid embossing material (4) on an embossing die (1),
b) Embossing the embossing material (4) at a temperature of less than 500°C and targeted structuring of a surface (6o) of the embossing material (4),
c) Hardening the embossing material (4),
d) Sintering the embossing material (4, 4') and thus executing the forming of the optical glass element (13), wherein through the sintering a shrinkage and a reduction of the surface roughness of the glass element (13) is achieved as a result of the targeted structuring.

2. Method according to Claim 1, **characterized in that** the embossing is carried out in step b) at a temperature of less than 400°C, preferably less than 300°C, more preferably less than 200°C, even more preferably less than 100°C, and most preferably at room temperature.

3. Method according to one of the preceding claims, wherein after step a), the degree of coverage of an embossing die surface (Io) of the embossing die (1) is more than 20%, preferably more than 40%, more preferably more than 60%, most preferably more than 80%, and with utmost preference 100%.

4. Method according to one of the preceding claims, wherein the embossing material (4) is applied in the form of multiple small, distributed drops on the embossing die (1), in particular on the embossing die surface (1o) of the embossing die (1).

5. Method according to one of the preceding claims, wherein the embossing of the embossing material (4) is carried out in step b) by a converging of the, in particular lower, embossing die (1) and another, in particular upper, embossing die (2).

6. Method according to one of the preceding claims, wherein the hardening of the embossing material (4) is carried out in step c) by a thermal method, whereby heat is transported to the embossing material (4), whereby a polymerization process of the embossing material (4) starts above a critical temperature Tk, whereby the critical temperature lies between 0°C and 1,000°C, preferably between 10°C and 750°C, even more preferably between 20°C and 500°C, most preferably between 30°C and 250°C, and all the more preferably between 50°C and 200°C.

7. Method according to one of Claims 1 to 5, wherein the hardening of the embossing material (4) is carried out in step c) by an electromagnetic method, whereby the embossing material (4) is irradiated by an electromagnetic radiation, in particular UV light, whereby the wavelength range of the electromagnetic radiation lies between 1 nm and 10,000 nm, preferably between 10 nm and 1,000 nm, more preferably between 100 nm and 500 nm, and most preferably between 200 nm and 500 nm.

8. Method according to one of the preceding claims, wherein steps a), b) and c) are performed in an embossing device (8), and the sintering is performed in step d) in a sintering device (9) that is separated from the embossing device (8) and arranged preferably outside of the embossing device (8).

9. Method according to one of the preceding claims, wherein the sintering is carried out in step d) by microwave radiation.

10. Method according to one of Claims 1 to 8, wherein the sintering is carried out in step d) in a furnace, preferably in a continuous furnace, whereby the temperature during sintering is greater than 50°C, preferably greater than 100°C, more preferably greater than 300°C, even more preferably greater than 500°C, especially preferably greater than 700°C, and most preferably greater than 900°C.

11. Method according to one of the preceding claims, wherein the embossing material (4) has at least one of the following components:
• Polyhedral oligomeric silsesquioxane POSS
• Polydimethylsiloxane PDMS
• Tetraethyl orthosilicate TEOS
• Poly(organo)siloxane silicone

## Revendications

1. Procédé de fabrication d'un élément de verre optique (13), comprenant le déroulement suivant :
a) application d'une masse de marquage (4) fluide sur un poinçon de marquage (1),
b) embossage de la masse de marquage (4) à une température inférieure à 500°C et structuration ciblée d'une surface (6o) de la masse de marquage (4),
c) durcissement de la masse de marquage (4),
d) frittage de la masse de marquage (4, 4') et ainsi formation initiale de l'élément de verre optique (13), dans lequel, par le frittage, un rétrécissement et une diminution de la rugosité de surface de l'élément de verre (13) ont lieu à la suite de la structuration ciblée avant le frittage.

2. Procédé selon la revendication 1, **caractérisé en ce que** l' embossage marquage à l'étape b) est effectué à une température inférieure à 400°C, de préférence inférieure à 300°C. de manière plus préférée inférieure à 200°C, de manière encore plus préférée inférieure à 100°C et de manière la plus préférée à température ambiante.

3. Procédé selon l'une des revendications précédentes, **caractérisé en ce qu'**après l'étape a), le degré de couverture d'une surface de poinçon de marquage (1o) du poinçon de marquage (1) fait plus de 20 %, de préférence plus de 40 %, de manière plus préférée plus de 60 %, de manière la plus préférée plus de 80 %, de manière préférée entre toutes 100 %.

4. Procédé selon l'une des revendications précédentes, **caractérisé en ce que** la masse de marquage (4) est appliquée sous forme de plusieurs petites gouttes réparties sur le poinçon de marquage (1), en particulier sur la surface de poinçon de marquage (1o) du poinçon de marquage (1).

5. Procédé selon l'une des revendications précédentes, **caractérisé en ce que** l'embossage de la masse de marquage (4) à l'étape b) est effectué par un rapprochement du poinçon de marquage (1) en particulier inférieur et d'un autre poinçon de marquage (2), en particulier supérieur.

6. Procédé selon l'une des revendications précédentes, **caractérisé en ce que** le durcissement de la masse de marquage (4) à l'étape c) est effectué par un procédé thermique, dans lequel de la chaleur est transportée vers la masse de marquage (4), dans lequel un processus de polymérisation de la masse de marquage (4) commence au-dessus d'une température critique Tk, dans lequel la température critique est entre 0°C et 1000°C, de préférence entre 10°C et 750°C, de manière plus préférée entre 20°C et 500°C, de manière la plus préférée entre 30°C et 250°C, de manière préférée entre toutes entre 50°C et 200°C.

7. Procédé selon l'une des revendications 1 à 5, **caractérisé en ce que** le durcissement de la masse de marquage (4) à l'étape c) est effectué par un procédé électromagnétique, dans lequel la masse de marquage (4) est rayonnée par un rayonnement électromagnétique, en particulier de la lumière UV, dans lequel la plage de longueur d'onde du rayonnement électromagnétique fait entre 1 nm et 10 000 nm, de préférence entre 10 nm et 1000 nm, de manière plus préférée entre 100 nm et 500 nm, de manière la plus préférée entre 200 nm et 500 nm.

8. Procédé selon l'une des revendications précédentes, **caractérisé en ce que** les étapes a), b) et c) sont exécutées dans un dispositif de marquage (8) et le frittage à l'étape d) est exécuté dans un dispositif de frittage (9) séparé du dispositif de marquage (8), disposé de préférence en-dehors du dispositif de marquage (8).

9. Procédé selon l'une des revendications précédentes, **caractérisé en ce que** le frittage à l'étape d) est effectué par rayonnement aux micro-ondes.

10. Procédé selon l'une des revendications 1 à 8, **caractérisé en ce que** le frittage à l'étape d) est effectué dans un four, de préférence dans un four à passage continu, dans lequel la température lors du frittage est supérieure à 50°C, de préférence supérieure à 100°C, de manière plus préférée supérieure à 300°C, de manière encore plus préférée supérieure à 500°C, de manière particulièrement préférée supérieure à 700°C, de manière la plus préférée supérieure à 900°C.

11. Procédé selon l'une des revendications précédentes, **caractérisé en ce que** la masse de marquage (4) présente au moins une des composantes suivantes :
• silsesquioxane oligomérique polyhédrique POSS
• polydiméthylsiloxane PDMS
• orthosilicate de tétraéthyle TEOS
• silicone polyorganosiloxane
